# EUROPEAN PATENT APPLICATION

(11) **EP 4 807 563 A1**
(43) Date of publication of application: **16.09.2026**
(21) Application number: 24899455.0
(22) Date of filing: 09.10.2024
(51) Int. Cl.: G06F 11/14

(54) **DATA VERIFICATION METHOD AND APPARATUS, DATA RECOVERY METHOD AND APPARATUS, DEVICE, AND MEDIUM**

(30) Priority: 07.12.2023 CN 202311691201
(71) Applicant: Huawei Technologies Co., Ltd., Shenzhen, Guangdong 518129 (CN)
(72) Inventor: ZHOU, Liyang, Shenzhen, Guangdong 518129 (CN); SUN, Qifu, Beijing 100083 (CN); MA, Lan, Beijing 100083 (CN); LIU, Shaoteng, Shenzhen, Guangdong 518129 (CN); CHEN, Xiangyu, Shenzhen, Guangdong 518129 (CN)
(74) Representative: Goddar, Heinz J.
(86) International application number: PCT/CN2024/123680
(87) International publication number: WO 2025/118811

(57) **Abstract**

Embodiments of this application relate to a method and apparatus for data checking, a data recovery method and apparatus, a device, and a computer-readable storage medium. The user method for data checking includes: obtaining a group of data units each having a plurality of subpackets and a corresponding parity-check matrix; and determining parity units for the group of data units based on the parity-check matrix. The data recovery method includes: obtaining a group of data units that include a to-be-recovered data unit, a corresponding group of parity units, and a parity-check matrix; and determining the to-be-recovered data unit based on the parity-check matrix. Particularly, the parity-check matrix used in embodiments of this application is a binary matrix representation of a finite field matrix. The parity-check matrix has a property of deriving from a sparse and regular finite field matrix corresponding to the parity-check matrix. Such a matrix is used to perform parity encoding and decoding to achieve high-performance small-subpacket pure exclusive OR encoding and decoding.

## Description

This application claims priority to Chinese Patent Application No. 202311691201.6, filed with the China National Intellectual Property Administration on December 7, 2023 and entitled "METHOD AND APPARATUS FOR DATA CHECKING, DATA RECOVERY METHOD AND APPARATUS, DEVICE, AND MEDIUM", which is incorporated herein by reference in its entirety.

### TECHNICAL FIELD

Embodiments of this application generally relate to the field of data security, and more specifically, to a method and apparatus for data checking, a data recovery method and apparatus, a device, and a computer-readable storage medium.

### BACKGROUND

With the development of computer technologies, various industries have become increasingly dependent on digital information, and an amount of electronic data generated and stored grows rapidly. Due to high storage costs and low scalability of the electronic data, conventional centralized storage cannot meet increasing data storage requirements. In recent years, distributed storage systems have gained widespread attention and adoption by virtue of their low costs, scalability, and high reliability.

In the distributed storage system, data is distributively stored across a plurality of servers (referred to as nodes) interconnected via a network. These nodes may contain low-cost servers that are susceptible to temporary or permanent failure due to factors such as disk failure, power outage, network disconnection, and server crashes, thereby challenging the reliability of data storage. To ensure data storage reliability, it is necessary to incorporate redundant data into the storage system. Furthermore, when a node fails or data thereon is unavailable due to other reasons (for example, storage errors), the storage system can use the redundant data to recover the data on the corresponding node.

### SUMMARY

This application provides a data parity solution. A parity-check matrix used in this solution is obtained by converting a regular and typically sparse matrix constituted by elements in a finite field. The finite field matrix is constructed based on a structure of a to-be-encoded codeword and has a maximum distance separable (Maximum Distance Separable, MDS) property. With such an array code, encoding and decoding efficiency can be improved.

According to a first aspect, a method for data checking is provided. The method includes: obtaining a group of data units, where each data unit in the group of data units has a plurality of subpackets; and obtaining a parity-check matrix, where the parity-check matrix is a binary matrix representation of a finite field matrix, and each element in the finite field matrix is from a specific finite field. In other words, the parity-check matrix can be divided into a plurality of submatrices of the same order, and each submatrix is a binary matrix representation of an element at a corresponding position in the finite field matrix. The method further includes: determining a group of parity units based on the parity-check matrix and the group of data units. The parity-check matrix used in the method can support high-performance parity coding in a pure exclusive OR manner. In addition, decoding data encoded in this manner can avoid a complex matrix inversion operation.

**In** some embodiments of the first aspect, the finite field matrix includes a first part, and the first part uses, as construction units, same-order matrices whose elements are from a binary extension field, where a product of an order of the construction unit and a degree of the binary extension field is equal to a quantity of subpackets of the data unit in the group of data units; and a quantity of construction units included in a row direction of the first part and a quantity of construction units included in a column direction of the first part are respectively equal to one of the following: a quantity of the group of data units and a quantity of the group of parity units. Therefore, a code construction manner of the finite field matrix is provided. A binary parity-check matrix converted from the finite field matrix constructed in this manner can support high-performance parity coding in the pure exclusive OR manner. In addition, decoding data encoded by using the obtained binary parity-check matrix can avoid a complex matrix inversion operation.

In some embodiments of the first aspect, the construction unit is a first-order matrix or a sparse matrix constituted by elements in the binary extension field, and a construction unit in construction units in a first row of the first part is an identity matrix. The finite field matrix constructed based on this can be converted into a sparse binary parity-check matrix, so that complexity of encoding and decoding performed with the binary parity-check matrix is low.

In some embodiments of the first aspect, construction units in a same row of the first part include a plurality of pairs of construction units, where each pair of construction units are equal, or each pair of construction units, after being converted into respective binary matrix representations, differs by one permutation matrix. Therefore, a condition for constructing the finite field matrix used in this embodiment of this application is provided, so that the finite field matrix constructed in this way can be converted into a regular sparse high-performance binary parity-check matrix.

In some embodiments of the first aspect, a quantity of subpackets of each data unit is less than or equal to 4, and construction units in a same row of the first part includes a plurality of pairs of construction units, where values of corresponding positions of each pair of construction units are the same, or a sum of values of corresponding positions of each pair of construction units is 1. Therefore, a simplified condition for constructing the finite field matrix in a small subpacket scenario is provided, so that the finite field matrix constructed in this way can be converted into a regular sparse high-performance binary parity-check matrix.

In some embodiments of the first aspect, each m-order submatrix in the finite field matrix is full-rank, and m is equal to a quantity of rows of the finite field matrix. Therefore, a constraint of constructing the finite field matrix satisfying an MDS property is provided, so that the binary parity-check matrix obtained from the finite field matrix has the MDS property.

In some embodiments of the first aspect, determining the group of parity units includes: determining, based on a pair of submatrices in the parity-check matrix and values of the group of data units, intermediate values of the group of parity units corresponding to the pair of submatrices, where the pair of submatrices corresponds to a pair of construction units that are adjacent to each other in a row direction of the finite field matrix; and determining values of the group of parity units based on the intermediate values. Therefore, a computational step can be reduced in an encoding process of determining the parity unit, thereby reducing computational overheads.

In some embodiments of the first aspect, a finite field is a binary extension field GF(2²) of degree 2 (over a prime subfield of the finite field). The finite field is used to construct the parity-check matrix, so that encoding and decoding performance of the obtained parity-check matrix can reach a theoretical limit in some cases.

In some embodiments of the first aspect, the method further includes: writing the group of data units to a group of data nodes; and writing the group of parity units to a group of check nodes. Therefore, the method can be applied to a storage system including a plurality of data nodes, to provide redundancy protection with high computing performance for data in the storage system.

According to a second aspect, a data recovery method is provided. The method includes: obtaining a group of data units and a corresponding group of parity units, where the group of parity units is determined based on the group of data units and a parity-check matrix, and the group of data units include a to-be-recovered data unit; obtaining the parity-check matrix, where the parity-check matrix is a binary matrix representation of a finite field matrix, and each element in the finite field matrix is from a specific finite field; and determining a value of the to-be-recovered data unit based on the group of data units, the group of parity units, and the parity-check matrix. The parity-check matrix used in the method can support high-performance parity coding in a pure exclusive OR manner. Therefore, in this method, performing corresponding decoding with the parity-check matrix can also achieve high performance, and can avoid a complex matrix inversion operation.

In some embodiments of the second aspect, the finite field matrix includes a first part, and the first part uses, as construction units, same-order matrices whose elements are from a binary extension field, where a product of an order of the construction unit and a degree of the binary extension field is equal to a quantity of subpackets of the data unit in the group of data units; and a quantity of construction units included in a row direction of the first part and a quantity of construction units included in a column direction of the first part are respectively equal to one of the following: a quantity of the group of data units and a quantity of the group of parity units. Therefore, a code construction manner of the finite field matrix is provided. A binary parity-check matrix converted from the finite field matrix constructed in this manner can support high-performance parity coding in the pure exclusive OR manner. Therefore, performing corresponding decoding with the obtained binary parity-check matrix can also achieve high performance, and can avoid a complex matrix inversion operation.

In some embodiments of the second aspect, determining the value of the to-be-recovered data unit includes: determining, based on the parity-check matrix, a computational path for computing the value of the to-be-recovered data unit and an intermediate value generated in the computational path; and determining the value of the to-be-recovered data unit based on the computational path and the intermediate value. Therefore, a matrix inversion operation can be eliminated in a decoding process of recovering raw data, thereby reducing step complexity and reducing computational overheads.

According to a third aspect, an apparatus for data checking is provided. The apparatus includes: a data obtaining module, configured to obtain a group of data units, where each data unit in the group of data units has a plurality of subpackets; a matrix obtaining module, configured to obtain a parity-check matrix, where the parity-check matrix is a binary matrix representation of a finite field matrix, and each element in the finite field matrix is from a specific finite field; and a determining module, configured to determine a group of parity units based on the parity-check matrix and the group of data units.

In some embodiments of the third aspect, the finite field matrix includes a first part, and the first part uses, as construction units, same-order matrices whose elements are from a binary extension field, where a product of an order of the construction unit and a degree of the binary extension field is equal to a quantity of subpackets of the data unit in the group of data units; and a quantity of construction units included in a row direction of the first part and a quantity of construction units included in a column direction of the first part are equal to one of the following: a quantity of the group of data units and a quantity of the group of parity units.

In some embodiments of the third aspect, the construction unit is a first-order matrix or a sparse matrix constituted by elements in the binary extension field, and a construction unit in construction units in a first row of the first part is an identity matrix.

In some embodiments of the third aspect, construction units in a same row of the first part include a plurality of pairs of construction units, where each pair of construction units are equal, or each pair of construction units, after being converted into respective binary matrix representations, differs by one permutation matrix.

In some embodiments of the third aspect, a quantity of subpackets of each data unit is less than or equal to 4, and construction units in a same row of the first part includes a plurality of pairs of construction units, where values of corresponding positions of each pair of construction units are the same, or a sum of values of corresponding positions of each pair of construction units is 1.

In some embodiments of the third aspect, each m-order submatrix in the finite field matrix is full-rank, and m is equal to a quantity of rows of the finite field matrix.

In some embodiments of the third aspect, the determining module includes: an intermediate value determining module, configured to determine, based on a pair of submatrices in the parity-check matrix and values of the group of data units, intermediate values of the group of parity units corresponding to the pair of submatrices, where the pair of submatrices corresponds to a pair of construction units that are adjacent to each other in a row direction of the finite field matrix; and an intermediate value reuse module, configured to determine values of the group of parity units based on the intermediate values.

In some embodiments of the third aspect, a finite field is a binary extension field GF(2²) of degree 2 (over a prime subfield of the finite field).

In some embodiments of the third aspect, the apparatus further includes: a data unit writing module, configured to write the group of data units to a group of data nodes; and a parity unit writing module, configured to write the group of parity units to a group of check nodes.

According to a fourth aspect, a data recovery apparatus is provided. The apparatus includes: a unit obtaining module, configured to obtain a group of data units and a corresponding group of parity units, where the group of parity units is determined based on the group of data units and a parity-check matrix, and the group of data units include a to-be-recovered data unit; a matrix obtaining module, configured to obtain the parity-check matrix, where the parity-check matrix is a binary matrix representation of a finite field matrix, and each element in the finite field matrix is from a specific finite field; and a determining module, configured to determine a value of the to-be-recovered data unit based on the group of data units, the parity unit, and the parity-check matrix.

In some embodiments of the fourth aspect, the finite field matrix includes a first part, and the first part uses, as construction units, same-order matrices whose elements are from a binary extension field, where a product of an order of the construction unit and a degree of the binary extension field is equal to a quantity of subpackets of the data unit in the group of data units; and a quantity of construction units included in a row direction of the first part and a quantity of construction units included in a column direction of the first part are equal to one of the following: a quantity of the group of data units and a quantity of the group of parity units.

In some embodiments of the fourth aspect, the determining module includes: an intermediate value determining module, configured to determine, based on the parity-check matrix, a computational path for computing the value of the to-be-recovered data unit and an intermediate value generated in the computational path; and an intermediate value reuse module, configured to determine the value of the to-be-recovered data unit based on the computational path and the intermediate value.

According to a fifth aspect, an electronic device is provided, including a processor and a memory. The memory stores instructions, and when the instructions are executed by the processor, the electronic device is enabled to perform an action of the method in any one of the first aspect or the embodiments of the first aspect, or an action of the method in any one of the second aspect or the embodiments of the second aspect.

According to a sixth aspect, a computer-readable storage medium is provided. The computer-readable storage medium stores instructions, and when the instructions are executed by an electronic device, the electronic device is enabled to perform an action of the method in any one of the first aspect or the embodiments of the first aspect, or an action of the method in any one of the second aspect or the embodiments of the second aspect.

According to a seventh aspect, a computer program product is provided. The computer program product is tangibly stored in a computer-readable medium and includes computer-executable instructions. When the computer-executable instructions are executed, an action of the method in any one of the first aspect or the embodiments of the first aspect is implemented, or an action of the method in any one of the second aspect or the embodiments of the second aspect is implemented.

### BRIEF DESCRIPTION OF DRAWINGS

The foregoing and other features, advantages, and aspects of embodiments of this application become clearer with reference to accompanying drawings and the following specific implementations. In the accompanying drawings, same or similar reference numerals indicate same or similar elements.
FIG. 1 is a diagram of an example environment in which a plurality of embodiments of this application can be implemented;
FIG. 2 shows a flowchart of an example method for data checking according to some embodiments of this application;
FIG. 3 shows a flowchart of an example data recovery method according to some embodiments of this application;
FIG. 4 is an example diagram showing an example structural form of a coefficient matrix for a decoding process according to some embodiments of this application;
FIG. 5 is a diagram of performing encoding and decoding in an example storage system by using an erasure code according to some embodiments of this application;
FIG. 6 is a diagram of construction of an example binary array code according to some embodiments of this application;
FIG. 7 is a diagram of construction of another example binary array code according to some embodiments of this application;
FIG. 8 is a diagram of construction of another example binary array code according to some embodiments of this application;
FIG. 9 is a block diagram of an apparatus for data checking according to some embodiments of this application;
FIG. 10 is a block diagram of a data recovery apparatus according to some embodiments of this application; and
FIG. 11 is a block diagram of an example device that may be configured to implement embodiments of this application.

### DESCRIPTION OF EMBODIMENTS

The following describes embodiments of this application in more detail with reference to accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that, the accompanying drawings and embodiments of this application are merely used as examples, but are not used to limit the protection scope of this application.

In descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may be further included below.

To recover corresponding data when a node in a storage system including a plurality of nodes fails, and ensure data storage reliability, redundant data needs to be added to the storage system. A conventional method for generating redundancy is repetition code encoding, for example, two additional copies may be generated for each data block. A total of three copies of the data block may then be respectively stored in three storage nodes. When a node fails, a same copy on any other node may be copied to a recovery node to recover data. However, this manner causes high additional storage resource overheads and a waste of resources.

More storage systems use erasure codes to maintain data availability, to avoid data loss caused by a failure of a storage node. The EC code is a fault-tolerant coding technology in which data is divided into a plurality of parts and these parts are used to generate redundant parity parts, and these parts are then respectively stored in different positions. For example, in a process of persisting data to a storage of the storage system, the system may divide the raw data into k raw data blocks, and apply a specific EC code scheme to these data blocks to generate r redundant parity blocks. However, the system may respectively persist the data blocks and the parity blocks to storages of n=k+r different storage nodes to persist data to the storages.

Encoded data may be verified by using a corresponding EC code scheme. When a fault like a data error, disk damage, or a node failure occurs, a valid data block and a corresponding parity block may be read from an undamaged disk or an available node to perform erasure code decoding. In this way, a lost data block can be recovered and written into a recovery disk/recovery node, thereby maintaining data reliability of the storage system.

An MDS array code is a type of erasure code. A codeword encoded using the MDS array code includes k+r units, where each unit has α-bit data or symbol. In the codeword, the k units are units from k blocks of raw data, and the r units are parity units computed based on raw data units. In addition, the array code meets an MDS property, so that any k units in the k+r units are sufficient to reconstruct all the k raw data units. In other words, any k units can tolerate failures of any r data units. For example, the MDS array code may be used in a redundant array of independent disks (Redundant Array of Independent Disks, RAID) having k data disks and r redundant parity disks, where data of a same unit of each codeword may be stored in a same disk, thereby allowing failures of r disks in the RAID.

A conventional erasure code scheme is to perform encoding and decoding in a finite field, and a multiplication operation in the finite field needs to be performed in erasure code encoding and decoding processes. The finite field is also referred as a Galois field (Galois Field, GF), and a finite field whose feature is *p* and whose extension degree is m on a prime subfield of the finite field is indicated by a *GF*(*p^{m}*) form in this specification. The multiplication operation in the finite field is much more complex than an exclusive OR (XOR) operation, causing a compute task in the encoding process to be very heavy. In addition, incremental encoding is not supported in the encoding process. This is not friendly to a server with weak computing power. In some methods, a finite field element in a used parity-check matrix is converted into a binary matrix (for example, a 0-1 matrix) representation, to attempt to convert the multiplication operation in the encoding process into the exclusive OR operation. However, the matrix converted in this way is dense, and encoding and decoding efficiency is low. In addition, in these methods, a matrix inversion operation cannot be avoided in a decoding process.

In other solutions, to purely use the exclusive OR operation, a k+2 array code is constructed, where the k+2 array code can tolerate failures of at most two nodes and achieve an MDS property. This pure exclusive OR MDS code needs to slice data at a fine granularity. A total quantity of slices is referred to as a quantity of subpackets. However, in this solution, the quantity of subpackets is approximately equal to a code length, and a large quantity of subpackets causes a sharp increase in encoding and decoding implementation complexity. Consequently, it brings high implementation complexity to industrial applications.

To resolve the foregoing problem and other problems, this application provides a solution to data checking and recovery. In this solution, corresponding parity units of a group of raw data units are determined by using an extension field representation-based sparse binary array code, to encode the raw data units into a codeword. In this solution, a parity-check matrix is obtained by converting a regular and typically sparse matrix constituted by elements in a finite field. The finite field matrix is constructed based on a structure of the codeword and has an MDS property. In this way, the converted parity-check matrix is a binary matrix representation corresponding to the finite field matrix. In other words, the parity-check matrix can be divided into a plurality of submatrices of the same order, where each submatrix is a binary matrix representation of an element at a corresponding position in the finite field matrix. The parity-check matrix has a property of deriving from a sparse and regular finite field matrix corresponding to the parity-check matrix. The parity-check matrix may be used to perform erasure code pure exclusive OR encoding and decoding, and an erasure code has an optimized small subpacket quantity level. An intermediate computational result can be reused during encoding and decoding, and a complex matrix inversion operation can be avoided during decoding, thereby improving encoding and decoding efficiency. In an example, the data parity and recovery solution in this application can support, for example, a majority of 2-redundancy (that is, k+2) coding modes, so that encoding and decoding performance of the data parity and recovery solution can reach or approach a theoretical limit in some cases.

Embodiments of this application may be applied to a storage system, to encode to-be-stored data by using an erasure code, thereby improving reliability of the storage system. For ease of description, the following describes embodiments of this application in a context of the storage system. However, it should be understood that embodiments of this application may alternatively be applied to another application scenario to encode a codeword and perform data parity and recovery.

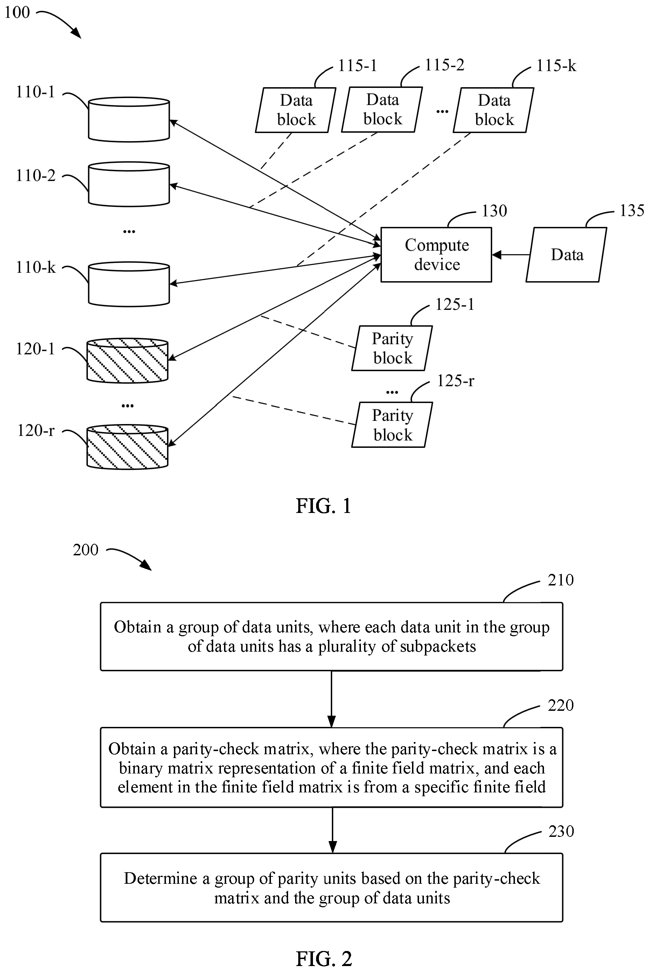

First, refer to FIG. 1. FIG. 1 is a diagram of an example environment 100 in which a plurality of embodiments of this application can be implemented. The example environment 100 includes data nodes 110-1 to 110-k (separately or collectively referred to as data nodes 110) and check nodes 120-1 to 120-r (separately or collectively referred to as check nodes 120). It should be understood that the data node 110 and the check node 120 in FIG. 1 are distinguished based on content of data that the data node 110 and the check node 120 are configured to store. The data node 110 is intended to store raw data; and the check node 120 is intended to store parity data computed based on the raw data, to provide redundancy protection for the raw data. Physical structures of all the data nodes 110 and the check nodes 120 may be the same. This is not limited in embodiments of this application. For example, disks in the data node 110 and the check node 120 may be disks that jointly form a RAID.

The environment 110 further includes a compute device 130. The compute device 130 may be a control device connected to the data node 110 and the check node 120, and may perform various actions according to embodiments of this application. Examples of the compute device 130 include, but are not limited to, a desktop computer, a notebook computer, a server, and the like. In addition, although shown as a single entity, the compute device 130 may alternatively be implemented as a centralized device group, a distributed device, a cloud-based device, and the like.

The compute device 130 may divide to-be-stored data into k data blocks in response to receiving a data storage command or the like. For example, a value of k may be equal to a quantity of data nodes 110. As shown in the figure, the compute device may divide data 135 into data blocks 115-1 to 115-k. Further, the compute device 130 may perform, for example, parity coding on the data blocks according to a method according to embodiments of this application, to compute r parity blocks based on the k data blocks. For example, a value of r is equal to a quantity of check nodes.

In some embodiments, the compute device 130 may write one corresponding data block of the k data blocks to each node in the data nodes 110, and write one corresponding parity block of the r parity blocks to each check node in the check nodes. For example, the compute device may determine parity blocks 125-1 to 125-r based on the data blocks 115-1 to 115-k, and respectively write the data blocks and the parity blocks to corresponding nodes, as shown in FIG. 1.

The compute device 130 may divide and write data into corresponding positions of respective nodes according to a predetermined specification or protocol, so that the compute device 130 may read and combine corresponding data from the nodes when needed. In this embodiment of this application, during encoding, the compute device 130 may divide each data block into a plurality of slices (in other words, so that each data unit includes a plurality of subpackets).

For example, for a quantity α of subpackets, during encoding, the compute device 130 may obtain α-bit data from each of the k data blocks each time as a basic unit of encoding, and compute r α-bit parity units based on the k data units. When reading data, the compute device 130 may determine, in a parity encoding manner based on the r parity blocks corresponding to the read k data blocks, whether the k data blocks are consistent with the stored raw data.

In some cases, an error may occur during data storage, or a part of nodes in the data nodes 110 may be faulty. As a result, a part of data blocks in the k data blocks of the stored data are unavailable. In this case, the compute device 130 may use remaining data blocks to recover lost data according to a used parity coding scheme. For example, as described in more detail below, the compute device 130 may recompute the lost data based on an array code according to embodiments of this application.

When the used array code has an MDS property, the compute device 130 may recover data on all the data nodes 110 from corresponding data of any k nodes in the data nodes 110 and the check nodes 120. In other words, the array code allows any r nodes in a group of nodes with r redundant nodes to fail.

It should be understood that an architecture and a function in the example environment 100 are described only for example purposes, and do not imply any limitation on the scope of this application. In addition, there may be another device, system, component, or the like that is not shown in the example environment 100. For example, in some embodiments, the device 130 may be a server of a cloud-based storage system, and the environment 110 may further have a client device. The client device may send a request like a data reading and storage request to the server 130, to trigger various actions described in embodiments of this application.

For example, in some embodiments, parity coding of data and recovery of lost data may be performed by the compute device 130 and another compute device (not shown) different from the device 130, respectively. In addition, embodiments of this application may be further applied to another environment having different functions and/or other functions. For description, embodiments of this application are described below in a context of an action performed by the compute device 130.

Now refer to FIG. 2. FIG. 2 shows a flowchart of an example method 200 for data checking according to some embodiments of this application. The example method 200 may be performed, for example, by the compute device 130 shown in FIG. 1. It should be understood that the method 200 may further include an additional action not shown, and the scope of this application is not limited in this aspect. The following describes the method 200 in detail with reference to the example environment 100 in FIG. 1.

210: Obtain a group of data units, where each data unit in the group of data units has a plurality of subpackets. For example, for data nodes 130-1 to 130-k, the compute device 130 may obtain a group of k data units, where each data unit has a plurality of subpackets. For example, a basic unit to be encoded into a single codeword may have multi-bit data or symbol.

In some embodiments, the compute device 130 may receive a data storage command, where the command instructs the compute device 130 to store particular data in the data nodes 110-1 to 110-k. To facilitate security of stored data, the compute device 130 may divide the data into k blocks for respective storage on the data nodes 110-1 to 110-k. Further, the compute device 130 may slice each part into a same quantity of slices to facilitate array code-based parity encoding. A total quantity of slices obtained by dividing each part is referred to as a quantity of subpackets. For example, the compute device may slice the data into α subpackets. Based on such a structure, for example, the compute device 130 may obtain a group of k α-bit or symbol data units as a data part of a coding unit, to perform parity coding.

220: Obtain a parity-check matrix, where the parity-check matrix is a binary matrix representation of a finite field matrix, and each element in the finite field matrix is from a specific finite field. For example, a finite field may be a binary extension field *GF*(2*ⁿ*). The binary extension field *GF*(2*ⁿ*) is a finite field that is an n-th degree extension of a prime field *GF*(2) (to be specific, it has an extension degree of n over its prime subfield, which is also referred to as a degree of the binary extension field being n in this specification), and contains 2*ⁿ* elements. Such a parity-check matrix can be divided into a plurality of submatrices of the same order, where each submatrix is a binary matrix representation of an element at a corresponding position in the finite field matrix.

For example, the compute device 130 may obtain the parity-check matrix that can be divided into the plurality of submatrices of the same order, where each submatrix is a 0-1 binary matrix representation (for example, a 0-1 binary matrix representation) of the element at the corresponding position in the finite field matrix. In some embodiments, the compute device 130 may load, at the beginning of an overall encoding procedure, the parity-check matrix stored as a part of parity coding software. In some other embodiments, the compute device 130 may access the parity-check matrix embedded in an encoding chip of the compute device 130.

A person skilled in the art will understand that the elements in the finite field may be represented by a binary matrix. A finite field GF(2⁴) is used an example. An element i may be first converted into a binary expression (*i*₀, *i*₁, *i*₂, *i*₃), where $i = {\sum }_{j = 0}^{3} \left({i}_{j}\times {2}^{j}\right)$. On this basis, i may be further converted into the following 0-1 binary matrix ${\sum }_{j = 0}^{3} \left({i}_{j}\times {A}^{j}\right)$, where a matrix A is: $A = \left[\begin{matrix}0 & 0 & 0 & 1 \\ 1 & 0 & 0 & 1 \\ 0 & 1 & 0 & 0 \\ 0 & 0 & 1 & 0\end{matrix}\right]$

Therefore, each element in the finite field *GF*(2*ⁿ*) may have a corresponding n-order binary matrix representation. In another example, a corresponding binary matrix representation of each element in a finite field GF(2²) may be shown as follows: $GF \left({2}^{2}\right) = \left\{0=\left[\begin{matrix}0 & 0 \\ 0 & 0\end{matrix}\right],1=\left[\begin{matrix}1 & 0 \\ 0 & 1\end{matrix}\right],α=\left[\begin{matrix}0 & 1 \\ 1 & 1\end{matrix}\right],{α}^{2}=α+1=\left[\begin{matrix}1 & 1 \\ 1 & 0\end{matrix}\right]\right\} .$

Specific construction of the parity-check matrix is described in more detail later by using the example of the finite field *GF*(2²). According to embodiments of this application, a binary matrix obtained by the compute device 130 for parity coding is sparse, to be specific, a quantity of 0 elements of the binary matrix is far greater than a quantity of non-0 elements (for example, a ratio of the two meets a threshold). In addition, based on the finite field *GF*(2²), the binary parity-check matrix can be exactly divided into a plurality of second-order (2×2) submatrices, where each submatrix corresponds to a binary matrix representation of one of the foregoing elements. In other words, the parity-check matrix can be converted into a matrix constituted by elements in the finite field *GF*(2²).

230: Determine a group of parity units based on the parity-check matrix and the group of data units. A quantity of subpackets of each parity unit in the group of parity units is the same as a quantity of subpackets of each unit in the group of data units. For example, for the check nodes 120-1 to 120-r, the compute device 130 may determine a group of r parity units for the group of data units based on the group of k data units obtained in 210 and the parity-check matrix obtained in 220. Like each data unit having α-bit data or symbol, each determined parity unit also has α-bit data or symbol.

As described in more detail in the following example, the parity-check matrix includes information about how to encode a data block. Therefore, the compute device 130 may generate a parity block for the data block based on the encoding information indicated in the parity-check matrix. *H* represents the parity-check matrix. In this case, for a code with a data dimension *k* and redundancy *r*, the compute device 130 may compute parity data based on the following formula relationship: $H \times {\left[m, p\right]}^{T} = H \times {\left[{m}_{1},{m}_{2},…,{m}_{k},{p}_{1},…,{p}_{r}\right]}^{T} = 0$

Herein, *mᵢ* (1 ≤ *i* ≤ *k*) is a data unit in a raw data block, *mᵢ* = [*m*_{*i*,1}*, m*_{*i,*2} *,*... , *m*_{*i,*α}] and includes α data bits or data symbols, *pᵢ* (1 ≤ *i* ≤ *n - k*) is a parity unit in a redundant data block generated during encoding, and *pᵢ* = [*p*_{*i,*1}*, p*_{*i,*2}*,* ... , *p_{i,α}*] and includes α parity bits or parity symbols.

In some embodiments, after determining the parity block according to the method 200, the compute device 130 may persist encoded data to a storage. For example, the compute device 130 may write a raw data block to the data node 110, and write a parity block to the check node 120. In an ideal case, the compute device 130 may write one data block in raw data blocks to the data node, and write one parity block in parity blocks to each check node in the check nodes 120. Therefore, redundancy protection may be provided for stored data. Subsequently, in the ideal case, when at most r data nodes in the data nodes 110 fail, the compute device 130 may use data on a surviving node in the data nodes 110 and the check nodes 120, to perform decoding based on the parity-check matrix, so as to recover lost data on the failed nodes.

The parity-check matrix used in the method 200 has a property of deriving from a sparse and regular finite field matrix corresponding to the parity-check matrix. Using such a matrix to perform parity coding can achieve high-performance small-subpacket pure exclusive OR coding, and can avoid a complex matrix inversion operation during subsequent decoding. For example, the data parity solution in this application can support a majority of 2-redundancy (that is, *k*+2) coding modes, so that encoding and decoding performance of the data parity solution can reach or approach a theoretical limit in some cases. The following describes, with reference to a more specific example, construction of the parity-check matrix according to embodiments of this application and encoding and decoding processes.

First, an example in which a redundancy level *r* = 2 is used to describe construction of the parity-check matrix according to embodiments of this application. In this case, for an array code with an array dimension α (equal to a quantity of subpackets) and a code length *n* = *k +* 2, a final parity-check matrix *H* includes two concatenated parts, as shown in the following formula: $H = \left(\left.{H}_{1}\right|{I}_{2 α \times 2 α}\right)$

Herein, *I*_{2*α*×2*α*} is a 2*α* × 2*α* identity matrix whose order is 2*α* ; and ${H}_{1} = \left(\begin{matrix}{I}_{α \times α} & {I}_{α \times α} & {I}_{α \times α} & … & {I}_{α \times α} \\ {A}_{1} & {A}_{2} & {A}_{3} & … & {A}_{k}\end{matrix}\right)$ , where *I*_{*α*×*α*} is a *α* × *α* identity matrix, and *Aᵢ* is a *α* × *α* 0-1 binary matrix. To be specific, it may be considered that in *H*₁, a *α* -order submatrix is used as a construction unit. *H*₁ has construction units in two (2) rows equal to the redundancy level 2, where each of construction units in a first row is an identity matrix, and the first row has construction units that are in *k* columns equal to a quantity *k* of data units.

For the 0-1 matrix *H*₁, a matrix ${H}_{1 ′} = \left(\begin{matrix}I & I & I & … & I \\ {B}_{1} & {B}_{2} & {B}_{3} & … & {B}_{k}\end{matrix}\right)$ constituted by elements in the finite field *GF*(2*ⁿ*) may be first constructed, where each element is an element in *GF*(2*ⁿ*), *I* and *Bᵢ* are identity matrices with a same shape. Based on the matrix representation of the element in the finite field described above, each matrix *I* may be expanded into an *I*_{*α*×*α*} matrix at a corresponding position in *H*₁, and each *Bᵢ* may be expanded into *Aᵢ* at a corresponding position in *H*₁.

That is, for 1 ≤ *i* ≤ *k,* ${B}_{i} = \left[\begin{matrix}{b}_{1 , 1}^{\left(i\right)} & ⋯ & {b}_{1 , t}^{\left(i\right)} \\ ⋮ & ⋱ & ⋮ \\ {b}_{t , 1}^{\left(i\right)} & ⋯ & {b}_{t , t}^{\left(i\right)}\end{matrix}\right]$ may be expanded into a 0-1 matrix ${A}_{i} = \left[\begin{matrix}{A}_{1 , 1}^{\left(i\right)} & ⋯ & {A}_{1 , t}^{\left(i\right)} \\ ⋮ & ⋱ & ⋮ \\ {A}_{t , 1}^{\left(i\right)} & ⋯ & {A}_{t , t}^{\left(i\right)}\end{matrix}\right]$, where ${b}_{j , k}^{\left(i\right)} ∈ GF \left({2}^{n}\right)$, and corresponds to ${A}_{j , k}^{\left(i\right)}$ in the matrix *Aᵢ*. Based on a shape of the parity-check matrix based on a structure of a to-be-encoded codeword, it is easy to know that each ${A}_{j , k}^{\left(i\right)}$ is a $\frac{α}{t} \times \frac{α}{t}$ 0-1 matrix, and the extension degree *n* of the finite field *GF*(2*ⁿ*) over the prime subfield *GF*(2) of the finite field satisfies $n = \frac{α}{t}$, that is, a quantity of subpackets during coding is *α* = *n* * *t.*

A minimum quantity of subpackets that can be supported by a current code type may be selected based on a code length. According to this embodiment of this application, a maximum supported code length may be 9 for 4 subpackets, and a maximum supported code length may be 22 for 8 subpackets. Compared with another array code whose quantity of subpackets is close to a code length (for example, 22 subpackets may be required for a code length 22), the parity-check matrix used in this embodiment of this application can support coding with a smaller quantity of subpackets when a codeword is long, thereby reducing computational complexity.

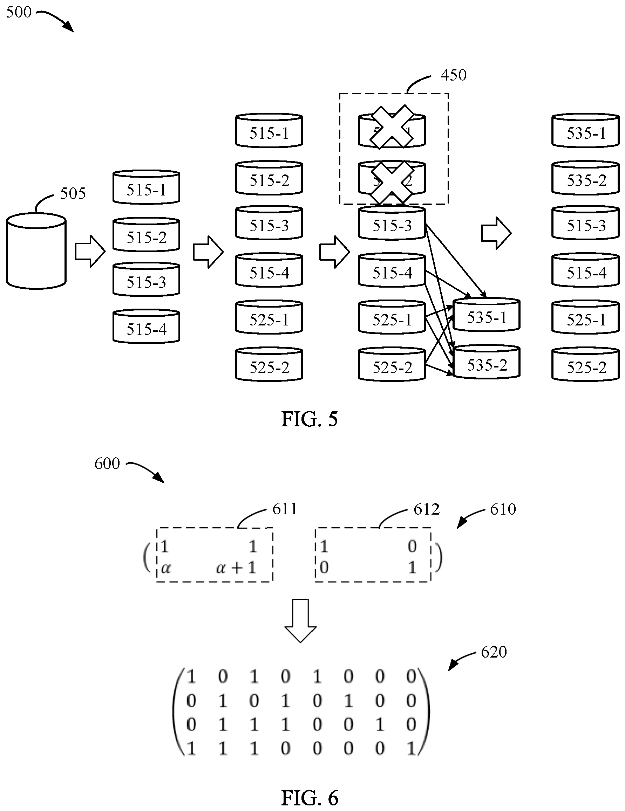

Further, n that can be exactly divided by a quantity of subpackets may be selected. For the purpose of simple computation, smaller n may be preferentially selected to test and construct a finite field matrix with an MDS property. For example, some examples of this application are described later by using GF(2²) as an example. It can be learned from these examples that encoding and decoding performance of the parity-check matrix constructed based on the field can reach or approach a theoretical limit in some cases. After other parameters are determined, an order t of to-be-constructed Bᵢ may be correspondingly obtained. In some embodiments, it is possible that each Bᵢ may include one element in *GF*(2²), in other words, Bᵢ is a first-order matrix, for example, as shown in an example described later with respect to FIG. 5.

When the redundancy level is 2, a structure of the finite field matrix H₁, continues to be described by using an example in which t = 2. For 1 ≤ i ≤ k, sparse finite field matrices Bᵢ, such as a diagonal matrix, an anti-diagonal matrix, an upper/lower triangular matrix, or an anti-diagonal triangular matrix, may be sequentially filled into H₁,. Then, H₁, may be concatenated with I_{2α×2α} identity matrices that can be expanded into later, to obtain a representation of the parity-check matrix H in the finite field. In the representation, pairwise matching of Bᵢ is performed, to be specific, values of corresponding positions of each pair of adjacent sparse submatrices Bᵢ are the same, or a sum of values of corresponding positions of each pair of adjacent sparse submatrices Bᵢ is 1. In other words, every two parity submatrices are the same or differ by one identity matrix, which is applicable to a case in which a quantity of subpackets does not exceed 4 (for example, 2 subpackets or 4 subpackets). In addition, each submatrix of the sparse matrix with an order equal to a quantity of rows of *H* is full-rank, so that the MDS property can be satisfied.

A structure of the foregoing finite field matrix has sparseness and strong regularity, and a 0-1 parity-check matrix converted from the finite field matrix also maintains the foregoing property. When such a parity-check matrix is used for encoding, a large quantity of intermediate computational results may be reused, thereby significantly reducing encoding complexity. In addition, efficiency of a corresponding decoding process for data recovery can also be improved.

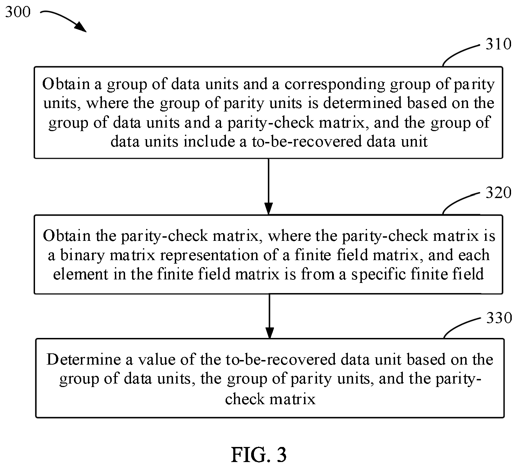

Now refer to FIG. 3. FIG. 3 shows a flowchart of an example data recovery method 300 according to some embodiments of this application. For example, the example method 300 may be used in combination with the example method 200 to recover a partial corrupted data in data that has been verified and encoded according to the example method 200. The example method 300 may be performed, for example, by the compute device 130 shown in FIG. 1. In another example, the example method 200 and the example method 300 may be performed by the compute device 130 and another compute device, respectively. It should be understood that the method 300 may further include an additional action not shown, and the scope of this application is not limited in this aspect. For description, the following describes the method 300 in detail with reference to the example environment 100 in FIG. 1.

310: Obtain a group of data units and a corresponding group of parity units, where the group of parity units is determined based on the group of data units and a parity-check matrix, and the group of data units include a to-be-recovered data unit.

For example, the compute device 130 may obtain the group of data units and the corresponding group of parity units, where the group of parity units is determined based on the group of data units and the parity-check matrix, and the group of data units include the to-be-recovered data unit. For example, the group of compute units may be determined and written into the data nodes 110 and the check nodes 120 by the compute device 130 or the another compute device according to the method 200. The compute device 130 may read and combine corresponding data based on distribution of the group of data units and the corresponding parity units in the nodes.

320: Obtain the parity-check matrix, where the parity-check matrix is a binary matrix representation of a finite field matrix, and each element in the finite field matrix is from a specific finite field. For example, the compute device 130 may obtain the data units obtained in 310 and the parity-check matrix corresponding to the parity units.

In this embodiment of this application, the matrix can be divided into a plurality of submatrices of the same-order, where each submatrix is a 0-1 binary matrix representation (for example, a 0-1 binary matrix representation) of an element at a corresponding position in a matrix constituted by elements in a finite field, as described in the foregoing method 200. In some embodiments, the compute device 130 may load, at the beginning of an overall decoding procedure, the parity-check matrix stored as a part of parity coding software. In some other embodiments, the compute device 130 may access the parity-check matrix embedded in a decoding chip of the compute device 130.

330: Determine a value of the to-be-recovered data unit based on the group of data units, the group of parity units, and the parity-check matrix. For example, the compute device 130 may determine the value of the to-be-recovered data unit from remaining data in the obtained units based on the data units and the parity units that are obtained in 310, the parity-check matrix obtained in 320, and decoding information indicated in the parity-check matrix, as described in more detail below.

Similar to the method 200, the parity-check matrix used in the method 200 has a property of deriving from a sparse and regular finite field matrix corresponding to the parity-check matrix. When data encoded by using the parity-check matrix is decoded to recover the data, a large quantity of intermediate computational results may be reused, and a complex matrix inversion operation can be avoided, thereby significantly reducing decoding complexity. For example, the data recovery solution in this application can support a majority of 2-redundancy (that is, k+2) coding modes, so that decoding performance of the data recovery solution can reach or approach a theoretical limit in some cases.

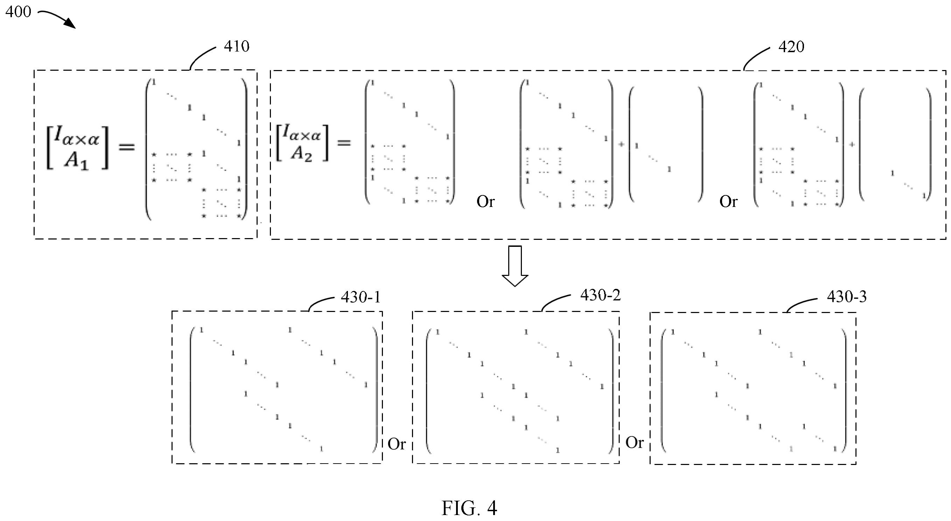

With reference to FIG. 4, the following describes how an inverse operation is eliminated in a decoding process. FIG. 4 is an example diagram 400 showing an example structural form of a coefficient matrix for a decoding process according to some embodiments of this application. In an example in FIG. 4, an example in which first two data nodes fail is used. In this case, based on a symbol representation of the foregoing array code structure, an inverse of $\left(\begin{matrix}{I}_{α \times α} & {I}_{α \times α} \\ {A}_{1} & {A}_{2}\end{matrix}\right)$ needs to be computed in a decoding process for recovering data of the first two nodes. However, due to a property of the parity-check matrix in embodiments of this application, the matrix inversion operation may be converted into a few simple row operations.

For example, it is assumed that finite field matrices *B*₁ and *B*₂ corresponding to 0-1 matrices *A*₁ and *A*₂ are upper and lower triangular matrices, respectively. Based on matrix construction described above, values of corresponding positions of the matrices *B*₁ and *B*₂ are the same, or a sum of values of corresponding positions of the matrices *B*₁ and *B*₂ is 1. In this case, a form of the 0-1 matrix *A*₁ obtained through extension may be shown in a reference numeral 410, and a form of the 0-1 matrix *A*₂ obtained through extension may be one of several forms indicated by a reference numeral 420. As shown in the figure, the matrices *A*₁ and *A*₂ are both sparse and regular. The foregoing coefficient matrix $\left(\begin{matrix}{I}_{α \times α} & {I}_{α \times α} \\ {A}_{1} & {A}_{2}\end{matrix}\right)$ may be transformed, by reusing an intermediate result, into a form as shown in one of reference numerals 430-1 to 430-3. Finally, through simple row and column permutations, the matrix may be transformed into a row-echelon form matrix, thereby eliminating matrix inversion computation in the decoding process.

In general, when the parity-check matrix according to this embodiment of this application is constructed, the corresponding high-order finite field matrix may be first constructed. If it is determined in the finite field that non-zero bit construction of the parity-check matrix may satisfy an MDS property, the finite field is traversed to determine an element at each position to construct the finite field matrix, where pairwise matching of submatrices is performed. Then, the finite field matrix may be converted into a binary parity-check matrix by using a matrix representation in the finite field. Then, the binary parity-check matrix may be used in encoding and decoding processes of determining parity data and recovery data.

In such an embodiment, similar to the finite field matrix corresponding to the parity-check matrix *H,* the constructed finite field matrix includes a first part. In the first part, same-order matrices constituted by elements in a binary extension field *GF*(2*ⁿ*) are used as construction units, where a product of an order of the construction unit and an extension degree of the used binary extension field is equal to a quantity *α* of subpackets of each data unit. The finite field matrix further includes a second part concatenated with the first part. The second part is an identity matrix, and it is easy to understand that an order of the second part is equal to a quantity of columns of the first part.

In some embodiments, the construction unit of the first part may be a first-order matrix (represented as a single element in the obtained finite field matrix). In some embodiments, the construction units of the first part may be same-order sparse submatrices constituted by elements in the binary extension field. In addition, a construction unit in construction units in a first row of the first part is an identity matrix. Construction units in a same row of the first part include a plurality of pairs of construction units, where each pair of construction units are equal, or each pair of construction units, after being converted into respective binary matrix representations, differs by one permutation matrix. When a quantity of subpackets is 4 or less, this property can simplify a case in which values of corresponding positions of each pair of construction units are the same, or a sum of values of corresponding positions of each pair of construction units is 1. In addition, each m-order submatrix in the finite field matrix is full-rank, and m is equal to a quantity of rows of the finite field matrix.

Specifically, for encoding of *k* data units plus *r* redundant units, the first part of the finite field matrix includes *k* construction units in a row direction, and includes *r* construction units in a column direction. In addition, each unit in units in a first row is an identity matrix. In the foregoing manner of filling the sparse submatrix Bᵢ, remaining r - 1 rows may be filled with construction units in r - 1 rows, so that these construction units, and a submatrix that meets a condition in the obtained finite field matrix are full-rank, for example, each m-order submatrix described above. For example, when a redundancy level is 3, construction units in two rows are filled below the identity matrices in the first row. In practice, simple conversion between rows and columns of the parity-check matrix constructed above also falls within the scope of the parity-check matrix in embodiments of this application.

Embodiments of this application may be applied to an encoding/decoding compute device in a storage system, for example, applied to a server device based on software computing or a chip based on hardware computing. A compute device (for example, the compute device 130) may encode raw data in the storage system by using the encoding parity-check matrix according to embodiments of this application, to generate redundant parity data. FIG. 5 is a diagram 400 of performing encoding and decoding in a non-limiting example storage system by using an erasure code. The diagram 400 schematically shows various data changes based on raw data in encoding and decoding processes. In the storage system, embodiments of this application may be applied to perform encoding and decoding by using the erasure code. For description, FIG. 4 is described below in a context of an action performed by the compute device 130 in FIG. 1.

In a non-limiting example, the storage system in FIG. 5 may include four data nodes and two check nodes that may be example implementations of the data nodes 110-1 to 110-k and the check nodes 120-1 to 120-r in FIG. 1, respectively. To cope with a disk deletion error, when raw data 505 is persisted to a storage, the compute device 130 may divide the raw data 505 into data blocks, to generate raw data blocks 515-1 to 515-4. Next, the compute device 130 may encode the raw data blocks 515-1 to 515-4 according to the method according to embodiments of this application, to generate redundant data blocks 525-1 and 525-2. Then, the compute device 130 may persist each of the raw data blocks 515-1 to 515-4 and the redundant data blocks 525-1 and 525-2 to a storage of a different storage node to persist data to the storage.

If a node fails due to a reason like disk damage, data stored on the node is about to be lost. In this example, as shown in a reference numeral 550, the raw data blocks 515-1 and 515-2 are lost. In this case, the compute device 130 may read available raw data or redundant data from the surviving node, and perform decoding according to the method according to embodiments of this application, to generate recovered data blocks 535-1 and 535-2 corresponding to the lost raw data blocks 515-1 and 515-2, so as to reconstruct nodes. Then, the compute device 130 may separately write the recovered data blocks 535-1 and 535-2 into corresponding recovery nodes, to maintain data reliability of the storage system.

It should be understood that, in the example in FIG. 5, quantities and a sequence of the data nodes, the check nodes, the failed node, and the like are shown only for the purpose of facilitating understanding, and specific quantities and the sequence of the nodes are not limited in embodiments of this application. It should be understood that, in the storage system with the redundancy level of r shown in FIG. 1, an erasure code scheme with an MDS property may allow any 1 to r nodes to fail.

In addition, in some embodiments, for example, due to a limitation like a hardware condition, the check node and the data node may not one-to-one correspond to a data block and a parity block of a codeword. For example, a quantity of compute nodes may be less than k, and/or a quantity of check nodes may be less than r. In this case, after parity coding is performed, the compute device 130 may write the data block and the parity block to nodes based on current possible optimized distribution. In some such embodiments, one node may store one or more data blocks of a group of data, and store one or more parity blocks of another group of data. In this way, during data recovery, the compute device 130 may obtain, based on storage distribution of the data, corresponding k+r blocks for decoding. In this way, the compute device 130 may recover any r blocks in an array code when the used array code has the MDS property.

In some embodiments, during encoding, the compute device 130 may determine, based on a pair of submatrices in the parity-check matrix and values of the group of data units, intermediate values of the parity units corresponding to the pair of submatrices. The pair of submatrices corresponds to a pair of construction units adjacent to each other in a row direction of the corresponding finite field matrix. When determining a value of the parity unit for the data unit, the compute device 130 may reuse the intermediate value, thereby reducing computational overheads and improving encoding efficiency.

Correspondingly, the compute device 130 may also reuse the intermediate computational value in a decoding process, to improve decoding efficiency. In some embodiments, when determining the value of the to-be-recovered data unit, the compute device 130 may determine, based on the parity-check matrix, a computational path for computing the value of the to-be-recovered data unit and an intermediate value generated in the computational path. Then, the compute device 130 may further determine the value of the to-be-recovered data unit based on the computational path and the intermediate value, to recover lost data.

For example, when a part of nodes in the data nodes 110 are faulty, the compute device 110 may read surviving data of an encoded codeword from the surviving data node 110 and the check node 130, and determine a to-be-decoded codeword based on sequence numbers respectively corresponding to the surviving node and the faulty node. It should be understood that the codeword mentioned in this specification is a logical concept including a group of data units and a group of parity units. Depending on specific implementation, in an actual execution process, the compute device 130 may not physically assemble a codeword structure, but directly compute to-be-recovered data based on a computational path for decoding.

Three illustrative examples according to some embodiments of this application are described below with reference to FIG. 6 to FIG. 8. In these examples, based on a structure of a to-be-encoded codeword (for example, determined based on a quantity of check nodes and a quantity of redundant nodes in a storage system), a corresponding array code is determined based on code type construction according to embodiments of this application. These examples then further show an encoding process of encoding data using the determined array code, and a decoding process of recovering lost data using the array code. Related actions in the examples in FIG. 6 to FIG. 8 may be performed, for example, by the compute device 130 in FIG. 1. Alternatively, in some embodiments, the encoding action and the decoding action may alternatively be performed by different devices, respectively. For description, the examples in FIG. 6 to FIG. 8 are described below in a context of an action performed by the compute device 130.

FIG. 6 is a diagram 600 of construction of an example binary array code according to some embodiments of this application. The binary array code in this example is constructed for [4,2] coding with 2 subpackets and has an MDS property. To be specific, the binary array code is intended to encode a codeword of the following structure: A code length is 4, where a data length is 2, and each data unit includes 2-bit data or symbol. For example, such an array code may be used in a storage system having two data nodes and two check nodes, and all raw data may be recovered when at most two nodes fail.

According to some embodiments of this application, to construct the array code in the diagram 600, a corresponding regular finite field matrix may be first constructed. In this example, a smaller quantity 2 of subpackets has been determined based on the code length 4. Based on this, a finite field matrix satisfying the MDS property is attempted to be constructed by using elements in *GF*(2²), and a finite field matrix 610 is obtained. Based on the code type described above, the constructed finite field matrix 610 is formed by concatenating two parts 611 and 612, where the part 612 is an identity matrix.

In addition, based on a constraint relationship between parameters for defining a code type structure, it is easy to understand that a construction unit of the part 611 is a first-order matrix (in other words, represented as a single element in the constructed matrix 610). The part 611 has two columns of construction units corresponding to the data length of 2 and two rows of construction units corresponding to a redundancy level 2. Because an order of each construction unit is 1, the part 611 has 2 columns and 2 rows of finite field elements. In this way, the obtained finite field matrix 610 has 4 columns and 2 rows of finite field elements after the part 611 is concatenated with the part 612 serving as the identity matrix.

Further, a first row of construction units of the part 611 are filled with 1, and the remaining second row is filled with elements in GF(2²), so that each 2×2 submatrix in the finite field matrix 610 is full-rank. On this basis, based on the foregoing binary matrix representation of the finite field element, because each element in the finite field matrix 610 may be replaced with a corresponding binary matrix representation, a final 0-1 parity-check matrix is obtained. For ease of reading, the matrix representations of the elements in GF(2²) are presented again as follows: $GF \left({2}^{2}\right) = \left\{0=\left[\begin{matrix}0 & 0 \\ 0 & 0\end{matrix}\right],1=\left[\begin{matrix}1 & 0 \\ 0 & 1\end{matrix}\right],α=\left[\begin{matrix}0 & 1 \\ 1 & 1\end{matrix}\right],α+1=\left[\begin{matrix}1 & 1 \\ 1 & 0\end{matrix}\right]\right\} .$

Based on the conversion table, the finite field matrix 610 may be converted into a final binary parity-check matrix 620. The compute device 130 may maintain the parity-check matrix 620 in a form of software or hardware for encoding and decoding. A person skilled in the art will understand that, in an encoding process, the compute device 130 may determine two corresponding parity units from two data units for 2 subpackets based on the matrix 620. For description, a first data unit is denoted as A = (a₁, a₂), a second data unit is denoted as B = (b₁, b₂), and the two to-be-determined parity units are successively denoted as P = (p₁, p₂) and Q = (q₁, q₂). In this case, based on the parity-check matrix 620, values of the parity units may be determined as follows: ${p}_{1} = 1 {a}_{1} + 0 {a}_{2} + 1 {b}_{1} + 0 {b}_{2} = {a}_{1} + {b}_{1} ;$ ${p}_{2} = 0 {a}_{1} + 1 {a}_{2} + 0 {b}_{1} + 1 {b}_{2} = {a}_{1} + {b}_{2} ;$ ${q}_{1} = 0 {a}_{1} + 1 {a}_{2} + 1 {b}_{1} + 1 {b}_{2} = {p}_{2} + {b}_{1} ;$ and ${q}_{2} = 1 {a}_{1} + 1 {a}_{2} + 1 {b}_{1} + 0 {b}_{2} = {p}_{1} + {a}_{2} .$

It should be understood that, if there is no explicit contrary indication, the "+" symbol in this specification means an exclusive OR operation ⊕. As shown in the foregoing formulas, in the encoding process, the intermediate results *p*₁ and *p*₂ may be reused. Therefore, complexity of an actual encoding process is changed to four exclusive OR operations, and two exclusive OR operations need to be performed on each bit on average, which reaches a theoretical limit.

In a storage system scenario, the foregoing data units may be respectively stored in corresponding nodes. The following describes a decoding process performed based on the parity-check matrix 620 by using an example in which nodes in which two data units A and B are located fail. In this case, the compute device 130 may use the parity-check matrix 620 to compute values of the data units A and B. Corresponding to the foregoing encoding process, the values of the data units may be recovered as follows: ${b}_{1} = {q}_{1} + {p}_{2} ;$ ${a}_{2} = {q}_{2} + {p}_{1} ;$ ${b}_{2} = {p}_{1} + {a}_{2} ;$ *and* ${a}_{1} = {p}_{2} + {b}_{1} .$

As shown in the foregoing formulas, in the decoding process, the intermediate results *a*₂ and *b*₁ may be reused. Therefore, complexity of an actual decoding process is changed to four exclusive OR operations, and two exclusive OR operations need to be performed on each bit on average, which also reaches a theoretical limit. In addition, the decoding process does not require a matrix inversion operation.

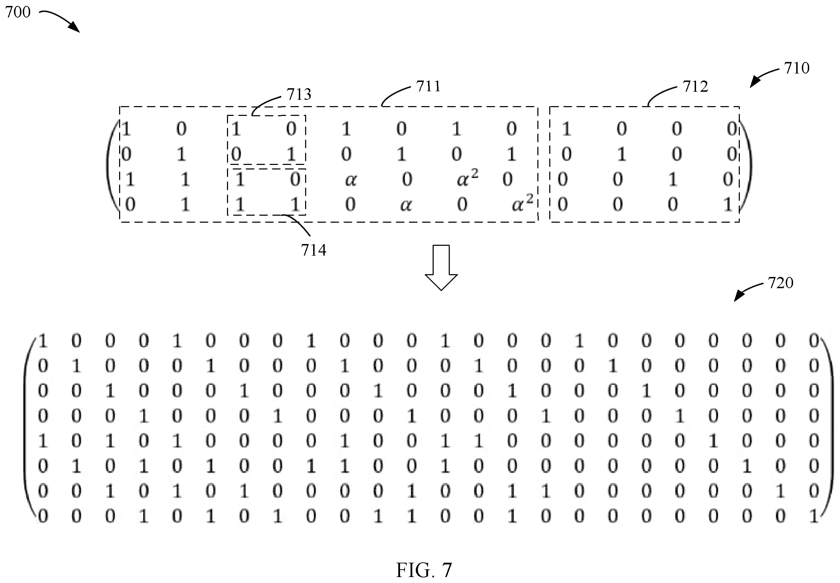

FIG. 7 is a diagram 700 of construction of another example binary array code according to some embodiments of this application. The binary array code in this example is constructed for [6,4] coding with 4 subpackets and has an MDS property. To be specific, the binary array code can be used to encode a codeword of the following structure: A code length is 6, where a data length is 4, and each data unit includes 4-bit data or symbol. For example, such an array code may be used in a storage system having four data nodes and two check nodes, and all raw data may be recovered when at most two nodes fail.

According to some embodiments of this application, to construct the array code in the diagram 700, a corresponding regular finite field matrix may be first constructed. In this example, a quantity 4 of subpackets has been determined based on the code length 6. Based on this, a finite field matrix satisfying the MDS property is attempted to be constructed by using elements in GF(2²), and a finite field matrix 710 is obtained. Based on the code type described above, the constructed finite field matrix 710 is formed by concatenating two parts 711 and 712, where the part 712 is an identity matrix.

In addition, based on a constraint relationship between parameters for defining a code type structure (as described above with reference to FIG. 2 and FIG. 4), it is easy to understand that a construction unit of the part 711 is a 2×2 matrix constituted by finite field elements. The part 711 has four columns of construction units corresponding to the data length of 4 and two rows of construction units corresponding to a redundancy level 2. Therefore, the part 711 has 8 columns and 4 rows of finite field elements. In this way, the obtained finite field matrix 710 has 12 columns and 4 rows of finite field elements after the part 711 is concatenated with the part 712 serving as the identity matrix.

Further, a first row of construction units of the part 711 are filled with second-order identity matrices, for example, as shown in a reference numeral 713. A remaining second row is filled with second-order sparse matrices (for example, a diagonal matrix, an anti-diagonal matrix, an upper/down triangular matrix, or an anti-diagonal triangular matrix) constituted by elements in GF(2²), for example, as shown in a reference numeral 714. The second-order sparse matrices in this row may be filled in the foregoing Bᵢ filling manner, so that pairwise matching of the second-order sparse matrices is performed, where elements at all corresponding positions are the same, or a sum of elements at all corresponding positions is 1; and each 4×4 submatrix in the finite field matrix 710 is full-rank.

On this basis, based on the following binary matrix representations of the elements in GF(2²), because each element in the matrix 710 may be replaced with a corresponding binary matrix representation, a final 0-1 parity-check matrix is obtained: $GF \left({2}^{2}\right) = \left\{0=\left[\begin{matrix}0 & 0 \\ 0 & 0\end{matrix}\right],1=\left[\begin{matrix}1 & 0 \\ 0 & 1\end{matrix}\right],α=\left[\begin{matrix}0 & 1 \\ 1 & 1\end{matrix}\right],{α}^{2}=α+1=\left[\begin{matrix}1 & 1 \\ 1 & 0\end{matrix}\right]\right\} .$

Therefore, the finite field matrix 710 may be converted into a final binary parity-check matrix 720. The compute device 130 may maintain the parity-check matrix 720 in a form of software or hardware for encoding and decoding. A person skilled in the art will understand that, in an encoding process, the compute device 130 may determine two corresponding parity units from four data units for 4 subpackets based on the matrix 720. For description, the data units are denoted as A = (a₁, a₂, a₃, a₄), B = (b₁, b₂, b₃, b₄), C = (c₁, c₂, c₃, c₄), and D = (d₁, d₂, d₃, d₄), and the two to-be-determined parity units are P = (p₁, p₂, p₃, p₄) and Q = (q₁, q₂, q₃, q₄). Similar to the example in FIG. 6, based on the parity-check matrix 720, values of the parity units may be determined as follows: ${x}_{1} = {a}_{1} + {b}_{1}$ ${x}_{2} = {a}_{2} + {b}_{2}$ ${x}_{3} = {a}_{3} + {b}_{3}$ ${x}_{4} = {a}_{4} + {b}_{4}$ ${y}_{1} = {c}_{1} + {d}_{1}$ ${y}_{2} = {c}_{2} + {d}_{2}$ ${y}_{3} = {c}_{3} + {d}_{3}$ ${y}_{4} = {c}_{4} + {d}_{4}$ ${p}_{1} = {x}_{1} + {y}_{1}$ ${p}_{2} = {x}_{2} + {y}_{2}$ ${p}_{3} = {x}_{3} + {y}_{3}$ ${p}_{4} = {x}_{4} + {y}_{4}$ ${q}_{1} = {x}_{1} + {y}_{2} + {a}_{3} + {d}_{1}$ ${q}_{2} = {x}_{2} + {y}_{1} + {a}_{4} + {c}_{2}$ ${q}_{3} = {x}_{3} + {y}_{4} + {b}_{1} + {d}_{3}$ ${q}_{4} = {x}_{4} + {y}_{3} + {b}_{2} + {c}_{4} .$

As shown in the foregoing formulas, in the encoding process, due to a property that the parity-check matrix 720 is sparse and regular, the intermediate computational results *x*₁, *x*₂, *x*₃, *x*₄, *y*₁, *y*₂, *y*₃, and *y*₄ corresponding to submatrices in the parity-check matrix 720 may be reused. Therefore, complexity of an actual encoding process is changed to 24 exclusive OR operations, and two exclusive OR operations need to be performed on each bit on average, which reaches a theoretical limit.

In a storage system scenario, the foregoing data units may be respectively stored in corresponding nodes. The following describes a decoding process performed based on the parity-check matrix 720 by using an example in which nodes in which two data units A and B are located fail. In this case, the compute device 130 may use the parity-check matrix 720 to compute values of the data units A and B. Corresponding to the foregoing encoding process, the values of the data units may be recovered as follows: ${x}_{1} = {c}_{1} + {d}_{1}$ ${x}_{2} = {c}_{2} + {d}_{2}$ ${x}_{3} = {c}_{3} + {d}_{3}$ ${x}_{4} = {c}_{4} + {d}_{4}$ ${y}_{1} = {p}_{1} + {x}_{1}$ ${y}_{2} = {p}_{2} + {x}_{2}$ ${y}_{3} = {p}_{3} + {x}_{3}$ ${y}_{4} = {p}_{4} + {x}_{4}$ ${a}_{3} = {q}_{1} + {x}_{2} + {y}_{1} + {d}_{1}$ ${a}_{4} = {q}_{2} + {x}_{1} + {y}_{2} + {c}_{2}$ ${b}_{1} = {q}_{3} + {x}_{4} + {y}_{3} + {d}_{3}$ ${b}_{2} = {q}_{4} + {x}_{3} + {y}_{4} + {c}_{4}$ ${b}_{3} = {y}_{3} + {a}_{3}$ ${b}_{4} = {y}_{4} + {a}_{4}$ ${a}_{1} = {y}_{1} + {b}_{1}$ ${a}_{2} = {y}_{2} + {b}_{2}$

As shown in the foregoing formulas, in the decoding process, the intermediate computational results *x*₁, *x*₂, *x*₃, *x*₄, *y*₁, *y*₂, *y*₃, *y*₄, and the like may be reused. Therefore, complexity of an actual decoding process is changed to 24 exclusive OR operations, and two exclusive OR operations need to be performed on each bit on average, which also reaches a theoretical limit. In addition, the decoding process does not require a matrix inversion operation.

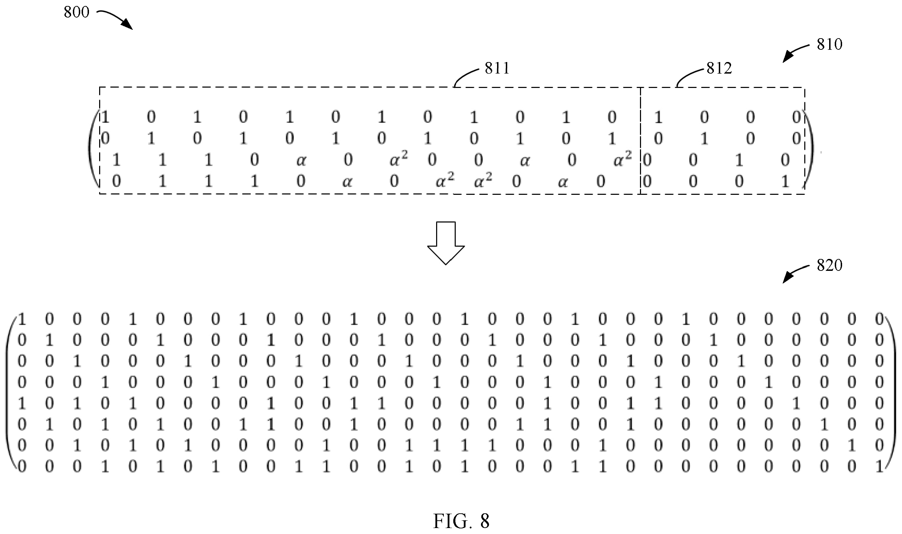

FIG. 8 is a diagram 800 of construction of another example binary array code according to some embodiments of this application. The binary array code in this example is constructed for [8,6] coding with 4 subpackets and has an MDS property. To be specific, the binary array code can be used to encode a codeword of the following structure: A code length is 8, where a data length is 6, and each data unit includes 4-bit data or symbol. For example, such an array code may be used in a storage system having six data nodes and two check nodes, and all raw data may be recovered when at most two nodes fail.

According to some embodiments of this application, to construct the array code in the diagram 800, a corresponding regular finite field matrix may be first constructed. In this example, a smaller quantity 4 of subpackets has been determined based on the code length 8. Based on this, a finite field matrix satisfying the MDS property is attempted to be constructed by using elements in *GF*(2²), and a finite field matrix 810 is obtained. Based on the code type described above, the constructed finite field matrix 810 is formed by concatenating two parts 811 and 812, where the part 812 is an identity matrix.

In addition, based on a constraint relationship between parameters for defining a code type structure, it is easy to understand that a construction unit of the part 811 is a 2×2 matrix constituted by finite field elements. Similar to the foregoing two examples, the part 811 has six columns of construction units corresponding to the data length of 6 and two rows of construction units corresponding to a redundancy level 2. Therefore, the part 811 has 12 columns and 4 rows of finite field elements. In this way, the obtained finite field matrix 810 has 16 columns and 4 rows of finite field elements after the part 811 is concatenated with the part 812 serving as the identity matrix.

Further, a first row of construction units of the part 811 are filled with second-order identity matrices. A remaining second row is filled with second-order sparse matrices constituted by elements in *GF*(2²). Similarly, the second-order matrices in this row may be filled in the foregoing *Bᵢ* filling manner, so that pairwise correspondence of the second-order matrices is performed, where elements at all corresponding positions are the same, or a sum of elements at all corresponding positions is 1; and each 2×2 submatrix in the finite field matrix 810 is full-rank.

On this basis, based on the following binary matrix representations of the elements in *GF*(2²), because each element in the matrix 810 may be replaced with a corresponding binary matrix representation, a final 0-1 parity-check matrix is obtained: $GF \left({2}^{2}\right) = \left\{0=\left[\begin{matrix}0 & 0 \\ 0 & 0\end{matrix}\right],1=\left[\begin{matrix}1 & 0 \\ 0 & 1\end{matrix}\right],α=\left[\begin{matrix}0 & 1 \\ 1 & 1\end{matrix}\right],{α}^{2}=α+1=\left[\begin{matrix}1 & 1 \\ 1 & 0\end{matrix}\right]\right\} .$

Therefore, the finite field matrix 810 may be converted into a final binary parity-check matrix 820. The compute device 130 may maintain the parity-check matrix 820 in a form of software or hardware for encoding and decoding. A person skilled in the art will understand that, in an encoding process, the compute device 130 may determine two corresponding parity units from six data units for 4 subpackets based on the matrix 620. For description, the data units are denoted as *A =* (*a*₁, *a*₂, *a*₃, *a*₄) , *B =* (*b*₁, *b*₂, *b*₃, *b*₄) , *C* = (*c*₁, *c*₂, *c*₃, *c*₄) , *D* = (*d*₁, *d*₂, *d*₃, *d*₄) *, E =* (*e*₁, *e*₂, *e*₃, *e*₄), and F = (*f*₁, *f*₂, *f*₃, *f*₄), and the two to-be-determined parity units are P = (*p*₁, *p*₂, *p*₃, *p*₄) and *Q* = (q₁, *q*₂, *q*₃, *q*₄). Similar to the foregoing two examples, based on the parity-check matrix 820, values of the parity units may be determined as follows: ${x}_{1} = {a}_{1} + {b}_{1}$ ${x}_{2} = {a}_{2} + {b}_{2}$ ${x}_{3} = {a}_{3} + {b}_{3}$ ${x}_{4} = {a}_{4} + {b}_{4}$ ${y}_{1} = {c}_{1} + {d}_{1}$ ${y}_{2} = {c}_{2} + {d}_{2}$ ${y}_{3} = {c}_{3} + {d}_{3}$ ${y}_{4} = {c}_{4} + {d}_{4}$ ${z}_{1} = {e}_{1} + {f}_{1}$ ${z}_{2} = {e}_{2} + {f}_{2}$ ${z}_{3} = {e}_{3} + {f}_{3}$ ${z}_{4} = {e}_{4} + {f}_{4}$ ${p}_{1} = {x}_{1} + {y}_{1} + {z}_{1}$ ${p}_{2} = {x}_{2} + {y}_{2} + {z}_{2}$ ${p}_{3} = {x}_{3} + {y}_{3} + {z}_{3}$ ${p}_{4} = {x}_{4} + {y}_{4} + {z}_{4}$ ${q}_{1} = {x}_{1} + {y}_{2} + {z}_{4} + {a}_{3} + {d}_{1} + {f}_{3}$ ${q}_{2} = {x}_{2} + {y}_{1} + {z}_{3} + {a}_{4} + {c}_{2} + {e}_{4}$ ${q}_{3} = {x}_{3} + {y}_{4} + {z}_{2} + {b}_{1} + {d}_{3} + {e}_{1}$ ${q}_{4} = {x}_{4} + {y}_{3} + {z}_{1} + {b}_{2} + {c}_{4} + {f}_{2} .$

As shown in the foregoing formulas, in the encoding process, due to a property that the parity-check matrix 620 is sparse and regular, the intermediate computational results *x*₁, *x*₂, *x*₃, *x*₄, *y*₁, *y*₂, *y*₃, *and y*₄ may be reused. Therefore, complexity of an actual encoding process is changed to 40 exclusive OR operations, and two exclusive OR operations need to be performed on each bit on average, which reaches a theoretical limit.

In a storage system scenario, the foregoing data units may be respectively stored in corresponding nodes. The following describes a decoding process performed based on the parity-check matrix 820 by using an example in which nodes in which two data units A and B are located fail. In this case, the compute device 130 may use the parity-check matrix 520 to compute values of the data units A and B. Corresponding to the foregoing encoding process, the values of the data units may be recovered as follows: ${x}_{1} = {c}_{1} + {d}_{1}$ ${x}_{2} = {c}_{2} + {d}_{2}$ ${x}_{3} = {c}_{3} + {d}_{3}$ ${x}_{4} = {c}_{4} + {d}_{4}$ ${y}_{1} = {e}_{1} + {f}_{1}$ ${y}_{2} = {e}_{2} + {f}_{2}$ ${y}_{3} = {e}_{3} + {f}_{3}$ ${y}_{4} = {e}_{4} + {f}_{4}$ ${z}_{1} = {p}_{1} + {x}_{1} + {y}_{1}$ ${z}_{2} = {p}_{2} + {x}_{2} + {y}_{2}$ ${z}_{3} = {p}_{3} + {x}_{3} + {y}_{3}$ ${z}_{4} = {p}_{4} + {x}_{4} + {y}_{4}$ ${a}_{3} = {q}_{1} + {x}_{2} + {y}_{4} + {z}_{1} + {d}_{1} + {f}_{3}$ ${a}_{4} = {q}_{2} + {x}_{1} + {y}_{3} + {z}_{2} + {c}_{2} + {e}_{4}$ ${b}_{1} = {q}_{3} + {x}_{4} + {y}_{2} + {z}_{3} + {d}_{3} + {e}_{1}$ ${b}_{2} = {q}_{4} + {x}_{3} + {y}_{1} + {z}_{4} + {c}_{4} + {f}_{2}$ ${b}_{3} = {z}_{3} + {a}_{3}$ ${b}_{4} = {z}_{4} + {a}_{4}$ ${a}_{1} = {z}_{1} + {b}_{1}$ ${a}_{2} = {z}_{2} + {b}_{2}$

As shown in the foregoing formulas, in the decoding process, the intermediate computational results *x*₁, *x*₂, *x*₃, *x*₄, *y*₁, *y*₂, *y*₃, and *y*₄ may be reused. Therefore, complexity of an actual decoding process is changed to 40 exclusive OR operations, and two exclusive OR operations need to be performed on each bit on average, which also reaches a theoretical limit. In addition, the decoding process does not require a matrix inversion operation. Particularly, in 28 possible decoding cases in which the parity-check matrix in this example is used, at least 20 cases can enable decoding complexity to reach a theoretical limit.

As shown in the foregoing examples, an embodiment of this application provides a solution of performing erasure coding by using a new pure exclusive OR array code. The array code may be constructed by designing a sparse and regular matrix in a high-order finite field and converting the matrix into a binary parity-check matrix by using a matrix representation in the finite field. In this way, a multiplication operation in encoding and decoding processes may be converted into an exclusive OR operation, thereby reducing computational complexity.

In addition, the obtained binary parity-check matrix retains a sparse and regular property, including pairwise matching of same or similar parity matrices, so that an intermediate computational result can be reused in the encoding and decoding processes to significantly reduce computational overheads, and can reach a theoretical limit in some embodiments. For example, for same parity matrices, reusing an intermediate computational result may completely eliminate this part of exclusive OR computational overheads; and for a parity submatrix that differs by an identity matrix, reusing an intermediate computational result may completely eliminate an exclusive OR operation outside a diagonal. In addition, the matrix inversion operation in the decoding process may be eliminated through row and column permutations, and is converted into a simple row operation, thereby significantly reducing decoding step complexity.

It should be understood that the examples in FIG. 6 to FIG. 8 are shown merely as examples. A person skilled in the art will understand that, coding may be performed based on parameters (for example, a shape of the parity-check matrix and a selected finite field) constructed based on a code type according to embodiments of this application, a computational path for encoding and decoding, a length of raw data, a length of parity data, a position of fault data, and the like, so that for a specific application scenario, computational efficiency is improved when limitations such as encoding and decoding requirements and hardware are met.

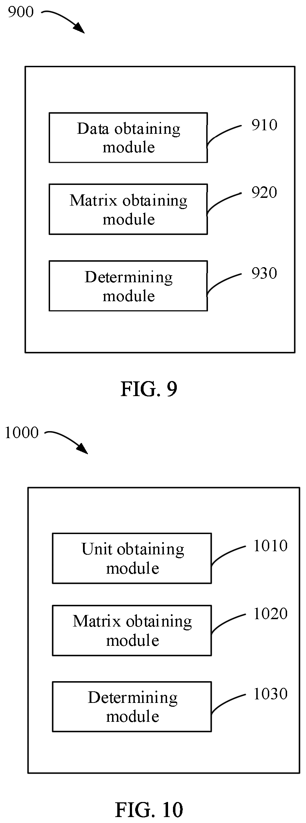

FIG. 9 is a block diagram of an apparatus 900 for data checking according to some embodiments of this application. The apparatus 900 may be implemented as or included in the compute device 130 in FIG. 1. The apparatus 900 may include a plurality of modules for performing, for example, corresponding actions in the method 200.

As shown in the figure, the apparatus 900 includes a data obtaining module 910, a matrix obtaining module 920, and a determining module 930. The data obtaining module 910 is configured to obtain a group of data units, where each data unit in the group of data units has a plurality of subpackets. The matrix obtaining module 920 is configured to obtain a parity-check matrix, where the parity-check matrix is a binary matrix representation of a finite field matrix, and each element in the finite field matrix is from a specific finite field. The determining module 930 is configured to determine a group of parity units based on the parity-check matrix and the group of data units.

In some embodiments, the finite field matrix includes a first part, and the first part uses, as construction units, same-order matrices whose elements are from a binary extension field, where a product of an order of the construction unit and a degree of the binary extension field is equal to a quantity of subpackets of the data unit in the group of data units; and a quantity of construction units included in a row direction of the first part and a quantity of construction units included in a column direction of the first part are equal to one of the following: a quantity of the group of data units and a quantity of the group of parity units.

In some embodiments, the construction unit is a first-order matrix or a sparse matrix constituted by elements in the binary extension field, and a construction unit in construction units in a first row of the first part is an identity matrix.

In some embodiments, construction units in a same row of the first part include a plurality of pairs of construction units, where each pair of construction units are equal, or each pair of construction units, after being converted into respective binary matrix representations, differs by one permutation matrix.

In some embodiments, a quantity of subpackets of each data unit is less than or equal to 4, and construction units in a same row of the first part includes a plurality of pairs of construction units, where values of corresponding positions of each pair of construction units are the same, or a sum of values of corresponding positions of each pair of construction units is 1.

In some embodiments, each m-order submatrix in the finite field matrix is full-rank, and m is equal to a quantity of rows of the finite field matrix.

In some embodiments, the determining module 930 includes: an intermediate value determining module, configured to determine, based on a pair of submatrices in the parity-check matrix and values of the group of data units, intermediate values of the group of parity units corresponding to the pair of submatrices, where the pair of submatrices corresponds to a pair of construction units that are adjacent to each other in a row direction of the finite field matrix; and an intermediate value reuse module, configured to determine values of the group of parity units based on the intermediate values.

In some embodiments, a finite field is a binary extension field GF(2²) of degree 2 (over a prime subfield of the finite field).

In some embodiments, the apparatus 900 further includes: a data unit writing module, configured to write the group of data units to a group of data nodes; and a parity unit writing module, configured to write the group of parity units to a group of check nodes.

FIG. 10 is a block diagram of a data recovery apparatus 1000 according to some embodiments of this application. The apparatus 1000 may be implemented as or included in the compute device 130 in FIG. 1. The apparatus 1000 may include a plurality of modules for performing, for example, corresponding actions in the method 300. It should be understood that, in some embodiments, the apparatus 1000 and the foregoing apparatus 900 may be implemented or included in a same compute device or different compute devices.

As shown in the figure, the apparatus 1000 includes a unit obtaining module 1010, a matrix obtaining module 1020, and a determining module 1030. The unit obtaining module 1010 is configured to obtain a group of data units and a corresponding group of parity units, where the group of parity units is determined based on the group of data units and a parity-check matrix, and the group of data units include a to-be-recovered data unit. The matrix obtaining module 1020 is configured to obtain the parity-check matrix, where the parity-check matrix is a binary matrix representation of a finite field matrix, and each element in the finite field matrix is from a specific finite field. The determining module 1030 is configured to determine a value of the to-be-recovered data unit based on the group of data units, the parity unit, and the parity-check matrix.

In some embodiments, the finite field matrix includes a first part, and the first part uses, as construction units, same-order matrices whose elements are from a binary extension field, where a product of an order of the construction unit and a degree of the binary extension field is equal to a quantity of subpackets of the data unit in the group of data units; and a quantity of construction units included in a row direction of the first part and a quantity of construction units included in a column direction of the first part are equal to one of the following: a quantity of the group of data units and a quantity of the group of parity units.

In some embodiments, the determining module includes: an intermediate value determining module, configured to determine, based on the parity-check matrix, a computational path for computing the value of the to-be-recovered data unit and an intermediate value generated in the computational path; and an intermediate value reuse module, configured to determine the value of the to-be-recovered data unit based on the computational path and the intermediate value.

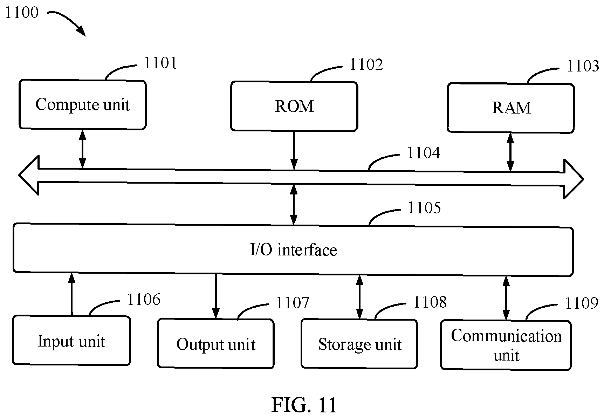

FIG. 11 is a block diagram of an example device 1100 that may be configured to implement embodiments of this application. The device 1100 may be configured to implement a function of the compute device 130 shown in FIG. 1. As shown in figure, the device 1100 includes a compute unit 1101. The device 1100 may perform various appropriate actions and processing according to computer program instructions stored in a random access memory (RAM) 1103 and/or a read-only memory (ROM) 1102 or computer program instructions loaded from a storage unit 1108 to a RAM 1103 and/or a ROM 1102. The RAM 1103 and/or the ROM 1102 may further store various programs and data required for operations of the device 1100. The compute unit 1101 is connected to the RAM 1103 and/or the ROM 1102 through a bus 1104. An input/output (I/O) interface 1105 is also connected to the bus 1104.

A plurality of components in the device 1100 are connected to the I/O interface 1105, including: an input unit 1106 like a keyboard or a mouse; an output unit 1107 like various types of displays or speakers; the storage unit 1108 like a magnetic disk or a compact disc; and a communication unit 1109 like a network interface card, a modem, or a wireless communication transceiver. The communication unit 1109 allows the device 1100 to exchange information/data with another device over a computer network like the Internet and/or various telecommunication networks.

The compute unit 1101 may be various general-purpose and/or special-purpose processing components that have processing and computing capabilities. Some examples of the compute unit 1101 include but are not limited to a CPU, a GPU, various dedicated AI computing chips, various compute units running machine learning model algorithms, a digital signal processor (digital signal processor, DSP), and any appropriate processor, controller, microcontroller, and the like. The compute unit 1101 performs the methods and processing described above, for example, the method 200 and/or the method 300. For example, in some embodiments, the method 200 and/or the method 300 may be implemented as a computer software program, which is tangibly included in a machine-readable medium, for example, the storage unit 1108. In some embodiments, a part or all of the computer program may be loaded to and/or installed on the device 1100 via the RAM and/or the ROM and/or the communication unit 1109. When the computer program is loaded to the RAM and/or the ROM and executed by the compute unit 1101, one or more steps of the method 200 and/or the method 300 described above may be performed. Alternatively, in some other embodiments, the compute unit 1101 may be configured to perform the method 200 and/or the method 300 in any other appropriate manner (for example, via firmware).

All or some of the foregoing embodiments may be implemented by using software, hardware, firmware, or any combination thereof. When the software is used for implementation, all or some of the embodiments may be implemented in a form of a computer program product. The computer program product includes one or more computer instructions. When the computer program instructions are loaded and executed on a server or a terminal, all or some of the procedures or functions based on embodiments of this application are generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a server or a terminal, or a data storage device, for example, a server or a data center, integrating one or more usable media. The usable medium may be a magnetic medium (for example, a floppy disk, a hard disk, or a magnetic tape), or may be an optical medium (for example, a digital video disk (digital video disk, DVD)) or a semiconductor medium (for example, a solid-state drive).

In addition, although operations are described in a particular order, it should be understood as that it is required that the operations are performed in the shown particular order or in sequence, or it is required that all operations shown in the figures should be performed to achieve an expected result. In a specific environment, multi-task and parallel processing may be advantageous. Similarly, although details of several specific implementations are included in the foregoing discussions, these details should not be construed as limiting the scope of this application. Some features described in the context of an individual embodiment may alternatively be implemented in combination in a single implementation. On the contrary, various features described in the context of a single implementation may alternatively be implemented in a plurality of implementations individually or in any appropriate sub-combination.

Although the subject matter is described in a language specific to structural features and/or method logic actions, it should be understood that the subject matter defined in the appended claims is not necessarily limited to the particular features or actions described above. On the contrary, the particular features and actions described above are merely example forms for implementing the claims.

## Claims

1. A method for data checking, comprising:
obtaining a group of data units, wherein each data unit in the group of data units has a plurality of subpackets;
obtaining a parity-check matrix, wherein the parity-check matrix is a binary matrix representation of a finite field matrix, and each element in the finite field matrix is from a specific finite field; and
determining a group of parity units based on the parity-check matrix and the group of data units.

2. The method according to claim 1, wherein the finite field matrix comprises a first part, and the first part uses, as construction units, same-order matrices whose elements are from a binary extension field, wherein
a product of an order of the construction unit and a degree of the binary extension field is equal to a quantity of subpackets of the data unit in the group of data units; and
a quantity of construction units comprised in a row direction of the first part and a quantity of construction units comprised in a column direction of the first part are respectively equal to one of the following: a quantity of the group of data units and a quantity of the group of parity units.

3. The method according to claim 2, wherein the construction unit is a first-order matrix or a sparse matrix constituted by elements in the binary extension field, and a construction unit in construction units in a first row of the first part is an identity matrix.

4. The method according to claim 3, wherein construction units in a same row of the first part comprise a plurality of pairs of construction units, wherein each pair of construction units are equal, or each pair of construction units, after being converted into respective binary matrix representations, differs by one permutation matrix.

5. The method according to claim 3, wherein the quantity of subpackets of each data unit is less than or equal to 4, and construction units in a same row of the first part comprises a plurality of pairs of construction units, wherein values of corresponding positions of each pair of construction units are the same, or a sum of values of corresponding positions of each pair of construction units is 1.

6. The method according to claim 3, wherein each m-order submatrix in the finite field matrix is full-rank, and m is equal to a quantity of rows of the finite field matrix.

7. The method according to claim 2, wherein determining the group of parity units comprises:
determining, based on a pair of submatrices in the parity-check matrix and values of the group of data units, intermediate values of the group of parity units corresponding to the pair of submatrices, wherein the pair of submatrices corresponds to a pair of construction units that are adjacent to each other in a row direction of the finite field matrix; and
determining values of the group of parity units based on the intermediate values.

8. The method according to claim 1, wherein the finite field is a binary extension field GF(2²) of degree 2.

9. The method according to claim 1, further comprising:
writing the group of data units to a group of data nodes; and
writing the group of parity units to a group of check nodes.

10. A data recovery method, comprising:
obtaining a group of data units and a corresponding group of parity units, wherein the group of parity units is determined based on the group of data units and a parity-check matrix, and the group of data units comprise a to-be-recovered data unit;
obtaining the parity-check matrix, wherein the parity-check matrix is a binary matrix representation of a finite field matrix, and each element in the finite field matrix is from a specific finite field; and
determining a value of the to-be-recovered data unit based on the group of data units, the group of parity units, and the parity-check matrix.

11. The method according to claim 10, wherein the finite field matrix comprises a first part, and the first part uses, as construction units, same-order matrices whose elements are from a binary extension field, wherein
a product of an order of the construction unit and a degree of the binary extension field is equal to a quantity of subpackets of the data unit in the group of data units; and
a quantity of construction units comprised in a row direction of the first part and a quantity of construction units comprised in a column direction of the first part are respectively equal to one of the following: a quantity of the group of data units and a quantity of the group of parity units.

12. The method according to claim 10, wherein determining the value of the to-be-recovered data unit comprises:
determining, based on the parity-check matrix, a computational path for computing the value of the to-be-recovered data unit and an intermediate value generated in the computational path; and
determining the value of the to-be-recovered data unit based on the computational path and the intermediate value.

13. An apparatus for data checking, comprising:
a data obtaining module, configured to obtain a group of data units, wherein each data unit in the group of data units has a plurality of subpackets;
a matrix obtaining module, configured to obtain a parity-check matrix, wherein the parity-check matrix is a binary matrix representation of a finite field matrix, and each element in the finite field matrix is from a specific finite field; and
a determining module, configured to determine a group of parity units based on the parity-check matrix and the group of data units.

14. A data recovery apparatus, comprising:
a unit obtaining module, configured to obtain a group of data units and a corresponding group of parity units, wherein the group of parity units is determined based on the group of data units and a parity-check matrix, and the group of data units comprise a to-be-recovered data unit;
a matrix obtaining module, configured to obtain the parity-check matrix, wherein the parity-check matrix is a binary matrix representation of a finite field matrix, and each element in the finite field matrix is from a specific finite field; and
a determining module, configured to determine a value of the to-be-recovered data unit based on the group of data units, the group of parity units, and the parity-check matrix.

15. An electronic device, comprising a processor and a memory, wherein the memory stores instructions, and when the instructions are executed by the processor, the electronic device is enabled to perform the method according to any one of claims 1 to 9 or 10 to 12.

16. A computer storage medium, wherein the computer-readable storage medium stores instructions, and when the instructions are executed by an electronic device, the electronic device is enabled to perform the method according to any one of claims 1 to 9 or 10 to 12.
